# EUROPEAN PATENT APPLICATION

(11) **EP 4 299 175 A1**
(43) Date of publication of application: **03.01.2024**
(21) Application number: 22182697.7
(22) Date of filing: 01.07.2022
(51) Int. Cl.: B01J 20/22, B01J 20/26, B01J 20/30

(54) **A PROCESS FOR THE PRODUCTION OF AN ADSORBENT BODY**

(71) Applicant: Immaterial Ltd, Cambridge CB4 0FW (GB)
(72) Inventor: CAMUR, Ceren, Cambridge (GB); BABU, Robin, Cambridge (GB); FAIREN-JIMENEZ, David, Cambridge (GB); SOMERVILLE-ROBERTS, Nigel, Cambridge (GB)
(74) Representative: Patent Boutique LLP

(57) **Abstract**

The present invention relates to a process for the production of an adsorbent body comprising a framework and a polymeric binder.

## Description

### Field of the invention

The present invention relates to a process for the production of an adsorbent body. The adsorbent body comprises one or more organic frameworks. The adsorbent body also comprises an organic polymeric binder.

### Background of the invention

The present invention provides the industrially relevant production of robust adsorbent bodies comprising organic frameworks. The organic frameworks are typically selected from metal-organic framework (MOF) and/or covalent-organic framework (COF) materials. For clarity, the term "framework(s)" is always used as a generic term to describe MOFs and COFs. MOFs and COFs are organic frameworks. The term "industrially relevant" refers to processes that would be capable of producing multi-kilo quantities of adsorbent bodies per day using equipment which is cost-effective and readily available. Lab-based making protocols and procedures using e.g., beakers and test tubes making gram quantity samples are thus typically not industrially relevant.

Organic frameworks, such as MOFs and COFs, are sorbent crystalline materials that can be used to store gas. The terms "frameworks" and "organic frameworks" are used interchangeably to describe metal-organic frameworks (MOFs) and/or covalent-organic frameworks (COFs). These materials can offer many performance advantages over current sorbent materials and are candidates for improved gas adsorption and storage systems, such as those required for practical transport systems. MOFs and COFs are of intense interest and many research groups and companies are active in developing synthesis routes and manufacturing methods. Examples of MOFs are HKUST-1, UiO-66 and ZIF-8.

The need to store as much gas as possible in a storage vessel of a given volume means that the bulk density of an adsorbent material is very important. The higher the density, the more material can fit into the available working volume. However, density should not come at a loss of porosity and sorption performance.

MOFs and COFs - and many other adsorbent framework materials - are typically synthesised in the form of fine, low-density powders. Fine powders are not suitable for many uses of organic frameworks such as bulk storage or selective adsorption of a component from a fluid. The low bulk density of typical MOF or COF powders limits the amount of adsorbent material that can be fitted into a vessel. In addition, the inevitable channeling and compaction of a fine, low-density powder causes major problems for the uniform flow of a fluid through the powder bed. For such adsorbent materials to be industrially useful, they need to be formed into mechanically robust larger bodies of higher density which retain high volumetric efficacy. Conventional options for forming robust larger bodies from fine powders include tabletting and extrusion.

However, many organic frameworks are not robust under pressure. For example, the bonds in MOFs are based on metal coordination chemistry and, as such, they are relatively weak. If many MOFs and COFs are subjected to high-compression forces, this can collapse their internal pores. This collapse results in the MOF or COF becoming amorphous, with a loss of surface area and consequent fluid storage capacity. High-pressure production processes, such as tabletting, to form compacted bodies of MOFs and COFs can result in compacted bodies having reduced surface areas and poorer fluid storage capacity.

An alternative approach is to mix a framework powder with a plasticiser/liquid to form a paste/soft solid and then to extrude the material to form an extrudate, followed by removal of the plasticiser/liquid to harden the extrudate. However, such extrudates very often need the presence of a binder material, commonly inorganic particulate binders such as hydrated alumina, to give mechanically robust bodies and the use of pre-dried framework powder(s), especially organic framework powders, can have some disadvantages such as the introduction of unwanted levels of meso and macro porosity. Extrusion is a mechanically simple and widespread process and is an attractive production method.

For an extrusion, or any particle-making, process to be industrially relevant, it has to be able to make handleable extrudates/bodies at industrially relevant rates using extant equipment. Most of the published art on the extrusion (or other particle formation steps) of MOFs or COFs describes work that has been done on a small scale, for example in a laboratory. Mixes of pastes/soft solids or blends containing adsorbent powder plus a plasticiser/lubricant liquid are typically made into single extrudate strands which are allowed to dry and are then cut up. The required physical properties of the mix being extruded or otherwise formed into small bodies to enable industrially relevant processing at scale is not described in the art. However, successful post-extrusion or general post-production handling of the formed small bodies is crucial to any larger-scale production rate.

For extrusion processes, the extruded strands need to be broken or cut into smaller lengths ("extrudates"). This can be done by mechanical cutting or by relying on the breakage of longer extrudates during extrusion and subsequent handling. Extrudates are often formed by the mechanical cutting of the extrudate strands using a die face-cutter. The extrudates are cut by a rotating blade moving across the surface of the die-plate. This means that the extrudates can be easily cut to a consistent length, which can be controlled by the rotational speed of the cutter tool.

For an extrudate-cutting process, or any body-forming process based on cutting, to work, the material should not stick to any blade used to cut the material. If significant amounts of material do stick to the cutting tool, this will rapidly result in the build-up of material on the cutting tool resulting in the production of large masses of material rather than discrete extrudates or bodies. The bodies, e.g., extrudates, also need to not stick to each other or equipment sides immediately after cutting or breaking. This is often a major problem with extrusion cutting processes due to the concentration of extrudes in a small space leading to frequent extrudate:extrudate impacts. If the extrudates or bodies are too soft and /or sticky, they can stick to each other after impact. Also, if the extruded strands are too soft or sticky, then processes which rely on mechanical breakage of the extrudate strands, such as extrusion-spheronisation, just do not work.

The issue of not having deformable material sticking to a cutting blade applies to material in other forms apart from extrudates, such as flakes, slabs, tablets or other larger bodies. Extrudates are a very convenient form, but being able to cut or otherwise break other larger bodies, such as larger "slabs" formed by tray-drying or large flat tablets, into smaller bodies by the use of e.g., a flaker or other cutting tool is also of industrial relevance. The formation of smaller bodies is very often followed by optional, but highly preferred, further process steps such as rounding in a spheroniser and controlled drying.

Thus it can be seen that successful, large-scale production of adsorbent framework bodies by extrusion, or other particle-forming process, requires the mix being processed to have specific physical properties. Any mix cannot be too soft when being cut or broken else it will stick either to itself or to the sides of equipment or to the cutting tools, rapidly leading to the process not being viable. If the mix is too hard, then the high pressures required to extrude the mixture, or otherwise form the bodies, may damage the porosity of the MOF or COF or generally make particles too hard to easily spheronise.

The use of a binder is often important to provide sufficient robustness to an organic framework (or other) body. Binders described in the art often comprise inorganic particles - such as hydrated alumina. Such inorganic particulate binders need to be used at relatively high levels (such as 30 wt %) to be effective and rely on particle:particle interlocking to provide robustness. The high levels of such binders inherently dilute the volumetric performance of such adsorbent bodies due to the replacement of framework material by binder. However, such particulate binders do not block the pores of the framework material. Most of the art describes processes wherein pre-formed and dried MOF powder (often a spray-dried powder) is mixed with a binder (typically an inorganic binder) and plasticiser/lubricant and then extruded. The MOF powder can be spray-dried and optionally milled prior to being mixed with the binder and plasticiser and extruded. Other known processes spray-dry a mixture of MOF powder and inorganic binder and then extrude the spray-dried granules to simplify processing.

For clarity, the term "framework body" describes a body, such as an extrudate, wherein the majority of the body (i.e., > 50 wt%) comprises one or more framework materials and mixtures and blends thereof.

The inventors have discovered that optimised organic framework bodies are formed when the MOF or COF crystallites forming the framework body are kept dispersed, and typically of small size, before forming the body. For example, it is better if the organic framework crystallites from a reaction mix do not go through a thorough drying step to form discrete dried, robust granules before being formed into larger bodies. Instead, it is better if the crystallites formed in a reaction mix are kept solvated (as in still having some free solvent) and dispersed before being formed into larger bodies. Typically, smaller organic framework crystallites allow tighter packing in the adsorbent body. It is possible, however, to combine limited quantities of pre-dried framework powder with the solvated framework (as described above) without excessive loss of beneficial properties. It may also be possible to re-solvate and re-disperse aggregates of previously dried framework powders provided sufficient solvent and agitation are provided. The inventive process allows high levels of solvent to be used in any re-solvation process.

For clarity, *"undried"* in the context of this application describes concentrated masses of framework material which have enough solvent to be deformable under moderate - e.g., manual, pressure but which are solid enough to mostly retain their shape when handled if formed into a shaped body. Typically undried framework masses will have less than 75% free solvent, or less than 70% free solvent or less than 60% free solvent or even less than 50% free solvent. *"Wet"* refers to masses of framework material and solvent which typically have enough free solvent, for example over 60% or over 70% or over 80% solvent, to form thick pastes or slurries. *"Dry"* refers to a body or mass of framework material which has been sufficiently dried to form hard, robust bodies. Such physically hard framework bodies can still contain significant levels of solvent, probably due to the high adsorbency of typical framework materials, such as MOFs or COFs. Dry framework bodies typically can still contain up to 50% solvent.

Typically, "free" solvent refers to that fraction of solvent or solvents which can be removed from a material by drying at 25 °C for 10 hours. Free solvent is not tightly bound to a species and can affect the rheology of the body. Free solvent is part of the total solvent. When measuring free solvent levels, sample sizes of between 2g and 10g are commonly used.

Hence, a *wet* material can be partially dried to first form an *undried* material and then dried further to form *dry* material. For any given framework-containing mix, the wet material will have a higher free solvent level than the undried material, which in turn will have a higher free solvent level than the dried material. However, the absolute amounts of solvent in these different stages (wet, undried, dry) may be different for different frameworks and binders. The dry framework bodies may be subjected to further processing steps such as solvent washing and activation at elevated temperatures to completely remove residual solvent.

Without wishing to be bound by theory, any drying step (such as spray-drying) which forms the framework crystallites into powders comprising discrete particles or granules is believed to inherently create significant levels of macro and mesoporosity in these larger dried aggregated particles. It is believed that the rapid removal of solvent involved in many drying processes creates larger pores or inhomogeneously hard regions. These framework powders, even when subjected to a size reduction step, can introduce unwanted levels of meso and macro-porosity into any framework bodies formed from them, thus reducing the volumetric performance of the body. High pressures may be used in an extrusion step to partially "squeeze out" at least part of this unwanted porosity but this can easily collapse the internal pores of many organic frameworks. However, adsorbent framework bodies can be made that incorporate part (i.e. < 50%) of the framework material as a pre-dried powder so as to limit the amount of unwanted porosity.

The inventors have found that optimised framework bodies are formed when *wet* framework material (such as described above) is combined with a polymeric binder (preferably in solution), partially dried to form an *undried* framework/binder mass of specified properties, formed into framework/binder bodies and then further dried under controlled (limited temperature) conditions to form *dried* framework adsorbent bodies. It may be preferred that the dried extrudates or bodies are then subjected to an additional solvent exchange and washing step. The binder can be in solution, preferably aqueous solution, to improve dispersion, or can be in solid form. Adding binder in solid form, preferably as a fine powder with intensive mixing, can be advantageous as this does not introduce additional free solvent. Suitable binders can include soluble organic polymeric material such as methyl cellulose or polyvinyl alcohol.

Controlling the physical properties of the *undried* framework/binder mass, for example by controlling the level of free solvent in the *undried* framework/binder mass, enables industrially relevant processes such as extrusion/spheronisation to be successfully used. A preferred feature of the process is that the major proportion of the framework crystallites is not formed into discrete dried powder particles before being formed into the larger framework bodies. This can avoid the introduction of unwanted levels of meso and macroporosity into the resultant framework bodies.

One issue is the need to concentrate the dispersed mixes of small framework crystallites typically formed in dilute reaction mixes. Preferably the crystallites have a mean particle size of less than 900 nm or less than 800 nm or less than 600 nm or less than 400 nm or even less than 200 nm. The small size of the preferred crystallites makes separation processes, such as filtering, more difficult and steps that moderately aggregate the crystallites in the reaction mix prior to separation can be advantageous. Solvents can always be removed by evaporation but is it preferable if at least some of the solvent present can be removed by other separation processes such as filtering, sedimentation or centrifugation as this will also remove dissolved materials such as unreacted raw materials in the removed solvent. The dilute reaction mixes (typically up to 5% or up to 10% solids) are concentrated to form a wet framework mass of typically greater than 10% solids. Typically the wet framework mass will contain < 30% solids content. This then needs to be contacted with the polymeric binder (preferably in solution) to give the wet binder mass. The wet binder mass is then formed into the undried binder mass by reducing the amount of solvent. The wet binder mass is typically far too liquid-like "as-is" to be formed into discrete bodies (esp when the polymeric binder is in solution). Solids levels can be less than 20%. Removal of free solvent makes the binder mass

more solid-like. The undried binder mass is now suitable for forming into extrudates or other bodies, followed by optional rounding and/or other process steps.

Typically, free solvent is that proportion of the solvent or solvents that is not strongly bound to another species - e.g. binder polymers - and is available to plasticise the binder and generally act as a lubricant. Free solvent can be removed by drying under ambient conditions at 25 °C - for 10 hours. Solvent that is not evaporated under these conditions is not regarded as being "free". The total level of solvent in a sample is determined by measuring the weight loss of a sample heated to 100 °C under vacuum for > 10 hours. The % solids content of a material is 100% minus the total solvent level. Preferably the free solvent to be removed comprises water. When the free solvent comprises water, the level of free solvent is commonly characterised by the *water activity.* This all needs to be done in an industrially-relevant manner.

### Summary of the invention

The present invention provides a process for the production of an adsorbent body, wherein the process comprises the steps of:
(a) forming a wet framework mass, wherein the wet framework mass comprises:
   (i) an organic framework; and
   (ii) first solvent;
(b) contacting the wet framework mass with a polymeric binder to form a wet binder mass;
(c) removing at least some but not all of the first solvent from the wet binder mass to form an undried binder mass;
(d) extruding and/or cutting the undried binder mass to form an undried adsorbent body;
(e) removing at least some of the first solvent from the undried adsorbent body to form a dried adsorbent body;
(f) contacting the dried adsorbent body with second solvent to form a washed adsorbent body;
(g) removing at least some of the second solvent from the washed adsorbent body to form an unactivated adsorbent body;
(h) activating the unactivated adsorbent body by subjecting the unactivated adsorbent body to a temperature of greater than 100°C to form an adsorbent body.

Typically, the undried binder mass is formed into undried adsorbent bodies, such as extrudates of pre-determined length. They are then preferably subjected to a further rounding step. The undried adsorbent bodies are then dried to form dried adsorbent bodies. Preferably, step (e) is carried out under controlled and limited conditions, such as < 80 °C or less than 60 °C or less than 40 °C or even at ambient conditions such as 20 °C, so as to slowly dry the undried adsorbent bodies. Slowly drying the undried adsorbent bodies is believed to be important to avoid cracking and fragmentation of the undried adsorbent bodies as the solvated binder material dries and shrinks. Higher drying temperatures can be used for low-volatility solvents such as DMF whereas lower drying temperatures are used for more volatile solvents such as water or ethanol or methanol. The dried adsorbent bodies are then typically subjected to a washing step with second solvent to remove unreacted materials and excess binder to enhance surface area to give washed adsorbent bodies. Following any solvent washing steps, the washed adsorbent bodies are then dried and activated at high temperature to form adsorbent bodies.

### Detailed description of the invention

**Process for the production of an adsorbent body.** The process comprises the steps of:
(a) forming a wet framework mass, wherein the wet framework mass comprises:
   (i) an organic framework; and
   (ii) first solvent;
(b) contacting the wet framework mass with a polymeric binder to form a wet binder mass;
(c) removing at least some but not all of the first solvent from the wet binder mass to form an undried binder mass;
(d) extruding and/or cutting the undried binder mass to form an undried adsorbent body;
(e) removing at least some of the first solvent from the undried adsorbent body to form a dried adsorbent body;
(f) contacting the dried adsorbent body with a second solvent to form a washed adsorbent body;
(g) removing at least some of the second solvent from the washed adsorbent body to form an unactivated adsorbent body; and
(h) activating the unactivated adsorbent body by subjecting the unactivated adsorbent body to a temperature of greater than 100°C to form an adsorbent body.

Typically, it is necessary to first wash and concentrate the framework crystallites from the dilute reaction mixes typically used to synthesise such materials to form the wet framework mass. The removal of bulk liquid can be done in multiple ways. It could be done by spray-drying - but as stated earlier, this results in the unwanted formation of larger dried granules and would also leave unwanted residual materials. Washing of the wet framework mass can mean that there is a mixture of solvents in the wet framework mass.

Concentrating the framework crystallites from reaction or wash mixes is commonly done in the lab by use of a centrifuge. Centrifuging a reaction mix is very effective at separating solid particles from surrounding liquor and can form a more concentrated slurry or solid layer. Centrifuging can be continuous or batch and integrated with other washing and separation processes. A preferred industrial solution is for the framework crystallites in the reaction mix to be concentrated to a wet framework mass by a filtration step. This can be simple to do but does leave the filtered wet framework mass with inherently higher levels of residual free solvent compared to e.g., high-speed centrifugation.

Adding polymeric binder solution further increases the level of solvent. Such wet binder masses are too liquid-like to be successfully extruded and/or cut. The wet binder mass needs to be subjected to a drying or free solvent reduction step to form an undried binder mass which is sufficiently solid-like for any extrusion and/or cutting step to be viable.

The term "free solvent" as used herein refers to a solvent that is available to plasticise a binder. The solvent that is tightly held inside the pores of the frameworks (for example) or is tightly bonded to a binder molecule or other species is not "free" as it is not readily available to plasticise the binder. Water that is held within a hydrate is not "free" and is not able to act as a lubricant and affect the rheology of the mix. When the solvent is water, the level of free solvent is related to the measured water activity. The water activity of a material at a given temperature is defined as the ratio of the humidity of air in equilibrium with the sample at that temperature to the saturated humidity of air at that temperature. It is highly preferable if the first solvent comprises water whenever possible due to the simplification of the resulting processes and ease of industrial application.

Typically, the level of free solvent can be reduced by controlled evaporation or by the addition of moderate (for example up to 40 wt %) levels of one or more porous fine powders which can adsorb at least some of the free solvent. Such powders can include silica, activated carbons, fine, pre-dried organic frameworks, zeolites or combinations thereof. Silica, for example, is able to strongly adsorb many solvents within its pores such that the solvent is no longer free. The level of free solvent in a body can be measured by measuring the weight loss of a sample at 25°C over 10 hours as this temperature will only remove solvent that is not tightly bound to, or held by, another species.

The present invention provides a process for the production of high performing adsorbent framework bodies by an extrusion and/or cutting process using a multi-stage drying process wherein a wet framework mass is contacted with polymeric binder, preferably in solution and even more preferably in aqueous solution, to form a wet binder mass. Preferably, the use of high levels of solvents means that the binder is well dispersed around the framework crystallites and the multi-stage drying process means that the level of binder in the final framework body does not need to be constrained by intermediate processing requirements. Typically, the wet binder mass then has enough free solvent removed to form a more solid-like undried binder mass which can be formed into undried adsorbent bodies and then subjected to at least one further solvent reduction step. The undried adsorbent bodies can be formed by an extrusion and/or cutting process. Preferably the undried adsorbent bodies are subjected to a rounding step before the further solvent reduction step to form the dried adsorbent bodies. The dried adsorbent bodies can undergo a washing step using a second solvent followed by drying to form washed adsorbent bodies.

It is highly preferred if the majority, or all, of the framework crystallites do not undergo a thorough drying step to form discrete, dried granules before being formed into larger bodies with the binder. A preferred process is when the framework is first synthesised in a dilute reaction mix and washed and/or concentrated to form a wet framework mass. The concentration step can be done by any known means and may include an aggregation step whereby the small individual framework crystallites are aggregated together, either by chemical or mechanical (e.g., ultrasound) means, to form larger secondary aggregates which are more easily removed, e.g., by filtering or centrifugation, from the reaction mix to form the wet framework mass. Such in-situ aggregates are typically not robust enough to retain any unwanted porosity etc during further processing.

The wet framework mass is then contacted with a polymeric binder, preferably in solution, to form a wet binder mass. It may be advantageous to further remove some free solvent from the wet framework mass before contacting the slurry with the organic polymeric binder. The level of free solvent in the wet binder mass is then reduced until the resulting undried binder mass has suitable rheological properties to be extruded and/or cut without smearing the cutting tool, excessively deforming or sticking to surfaces. The undried binder mass is then cut to form smaller bodies and preferably rounded. The smaller undried adsorbent bodies are then subjected to a gentle (slow) drying step to form dried adsorbent bodies, typically followed by solvent washing steps in a second solvent.

**Step (a) forming a wet framework mass.** Step (a) forms a wet framework mass.

Preferably, step (a) is carried out by:
(i) contacting together:
   (a) framework precursor materials, such as a metal-organic framework precursor material and/or a covalent organic framework precursor material; and,
   (b) reaction solvent,
   so as to form a dilute reaction mixture, wherein the dilute reaction mixture comprises:
   (a) metal-organic framework crystallites and/or covalent organic framework crystallites; and
   (b) reaction solvent; and
(ii) concentrating the dilute reaction mixture by removing at least some reaction solvent, and any other solvents, to form a wet framework mass, wherein the wet framework mass may also contain the first solvent from any washing steps to remove reaction solvent and other unwanted materials. The first solvent used in any washing steps may be the same as the reaction solvent or it may be different.

Preferably, the framework crystallites in the dilute reaction mixture are aggregated into larger secondary particles prior to the removal of part of the reaction solvent.

Preferably, the aggregation step is carried out by at least one of the following:
(a) addition of an anti-solvent;
(b) addition of a polymeric aggregation aid, including the polymer used as a binder; and/or
(c) application of high-frequency ultrasound.

Preferably, the anti-solvent is miscible with the reaction solvent and has a hydrogen bond HSP parameter dH that is different to the HSP hydrogen bond parameter of the reaction solvent by more than 10 MPa^{0.5}.

Preferably, the solvent removal step (ii) is carried out by at least one of the following:
(a) a filtration step;
(b) a sedimentation step;
(c) a centrifugation step;
(d) an evaporation step; and
(e) any combination thereof.

Preferably, the framework material is in particulate form during step (a). The framework material can be dispersed in a gel or slurry. More preferably, the framework material is in particulate form having a mean primary particle size of less than 900 nm.

Preferably, the framework material is in the form of crystallites.

Preferably, the framework material has a small primary particle size, preferably having a weight average particle size of from 5 nm to 900 nm, or from 10 nm to 800 nm, or from 12 nm to 700 nm, or from 15 nm to 500 nm. Small primary particles typically increase particle packing in the adsorbent bodies to give higher body densities. The method of measuring particle size is described in more detail below. The particle size of the framework material is preferably measured once the material has been formed into the adsorbent body. However, the particle size of the framework material can also be measured prior to step (a).

The particle size control of the framework material is believed to be important to ensure the formation of a high-quality high density adsorbent body. If the particles are too large, then this can lead to the formation of an adsorbent body having a poor (low) density profile and/or a poor robustness.

Step (a) can also be carried out by dispersing a pre-dried framework powder in the first solvent. Preferably, the framework powder is dispersed by a high shear step. Suitable equipment includes high shear mixers such as the IKA Ultra Turrax T25 or a sonicator such as the Bandelin SONOPULS HD 2000. The pre-dried framework powder can also be dispersed in first solvent by a wet milling step. Suitable equipment includes a ball mill or a roller mill. Typically, high levels of solvent (such as > 70 wt%) and high levels of agitation are needed to ensure good re-dispersion of the framework powder and to avoid the issues associated with pre-drying of the framework material.

**Step (b) forming a wet binder mass.** Step (b) contacts the wet framework mass with a polymeric binder to form a wet binder mass.

The polymeric binder can be in solution or it can be added as a solid (preferably as a fine powder) or as a slurry. Preferably the polymeric binder is added as a solution. The polymeric binder is typically mixed with the wet framework with extended mixing to ensure homogeneity.

**Step (c) forming an undried binder mass.** Step (c) removes at least some but not all of the first solvent from the wet binder mass to form an undried binder mass.

Step (c) can be achieved in several different ways. The wet binder mass can be further dried before cutting. This could be done in, e.g., a wiped film evaporator and the resulting undried binder mass is then cut and formed into smaller bodies. The wet binder mass could be allowed to dry on flat surfaces to form an undried binder mass followed by being cut in a cutting mill or flaker or other suitable cutting equipment.

Another option is to add an additional adsorbent solid material that is able to adsorb some of the free first solvent. Such material can be selected from fine activated carbon or silica or zeolite or even some pre-dried framework material (if levels are not too high) and mixtures thereof. The framework powder could be the same as that forming the framework mass or it could be different. Preferably the additional adsorbent material is selected from activated carbons, zeolites, organic frameworks, silica and mixtures thereof. The additional adsorbent solid material can even be polymeric binder if sufficient quantity it is added in fine powder form. Provided quantities of additional adsorbent solid material added are limited, some limited extra porosity could be acceptable.

A preferred option is to form the undried binder mass from the wet binder mass by combining free solvent evaporation from the wet binder mass with the addition of a limited amount of an additional adsorbent solid material. This can happen in different unit operations, for example, removal of some free first solvent in a wiped film evaporator followed by addition of additional adsorbent solid material in a mixer or extruder.

Suitable silicas for use as the additional adsorbent material are precipitated or fumed silicas, preferably fumed silica. Suitable fumed silica includes the Aerosil range from Evonik. Suitable precipitated silicas include the Sipernat range from Evonik.

Typically, the undried binder mass formed by the reduction in free solvent level has a viscosity of > 4.0 × 10⁵ mPa.s at 10 s⁻¹ and 25 °C before any cutting step. The undried binder mass retains enough free solvent as to be deformable under pressure and impact so it can be rounded, eg in a spheroniser. Typically, the viscosity of the undried binder mass is less than 1.25 × 10⁶ mPa.s at 10 s⁻¹ and 25 °C.

**Step (d) forming an undried adsorbent body.** Step (d) extrudes and/or cuts the undried binder mass to form an undried adsorbent body. Preferably, step (d) extrudes and/or cuts the undried binder mass to form an undried adsorbent body.

**Step (e) forming a dried adsorbent body.** Step (e) removes at least some of the first solvent from the undried adsorbent body to form a dried adsorbent body. Preferably step (e) is done gradually, such as at temperatures of less than 80 °C or less than 50 °C or less than 40 °C or even at ambient temperatures.

**Step (f) forming a washed adsorbent body.** Step (f) contacts the dried adsorbent body with second solvent to form a washed adsorbent body.

**Step (g) forming an unactivated adsorbent body.** Step (g) removes at least some of the second solvent from the washed adsorbent body to form an unactivated adsorbent body.

**Step (h) activation step.** Step (h) activates the unactivated adsorbent body by subjecting the unactivated adsorbent body to a temperature of greater than 100 °C to form an adsorbent body.

Optionally, Step (g) and step (h) can happen simultaneously.

**Wet framework mass.** The wet framework mass is formed in step (a). The wet framework mass comprises: (i) an organic framework; and (ii) first solvent. Preferably, the framework comprises organic framework selected from metal-organic framework (MOF) and/or covalent organic framework (COF). Most preferably, the wet framework mass comprises metal-organic framework. Preferably, the wet framework mass is a wet organic framework mass.

It may be preferred for the wet framework mass to be subjected to one or more washing and re-concentration steps subsequent to initial formation. The first solvent may be the same as the reaction solvent or it may be different depending on the washing steps.

**Framework.** The framework is an organic framework. Most preferably, the framework is a metal-organic framework.

**Organic framework.** The organic framework is a metal-organic framework (MOF), a covalent organic framework (COF) or a mixture thereof. The organic framework can comprise a mixture of more than one metal-organic framework (MOF) and/or more than one covalent organic framework (COF) or combinations thereof.

Preferably, the organic framework material is one or more metal-organic frameworks (MOF) selected from:
(i) Zr-containing MOFs;
(ii) Zn-containing MOFs such as zeolite imidazolate frameworks and Zn-containing UTSA-16 and CALF-20;
(iii) MOF-74 and derivatives thereof;
(iv) Al-based MOFs;
(v) Fe-based MOFs;
(vi) MOFs of the M(F₆₋ₓ)Lₓ family;
(vii) Cu-based MOFs;
(viii) Co-based MOFs including Co-UTSA-16;
(ix) Cr-based MOFs
(x) Nb-based MOFs;
(xi) Ni-based MOFs;
(xii) Mn-based MOFs;
(xiii) mixed metal MOFs; and
(xiv) any combination thereof.

Suitable Zr containing MOFs include UiO-66, UiO-67, UiO-68, NU-1000, PCN-222, MOF-808 and Zr-fumarate, and chemically functionalised derivatives thereof.

Suitable ZIF monoliths include ZIF-7, ZIF-8, ZIF-67, ZIF-71 and ZIF-90.

Suitable MOF-74s derivatives include Mn, Ni, Co, Cu and Zn variants.

Suitable Al-based MOFs include Al-fumarate, MIL-53, CAU-10, MIL-160(Al) and Al-soc-MOF-1.

Suitable Cr-based MOFs include MIL-100(Cr), and MIL-101(Cr).

Suitable MOFs of the M(F₆₋ₓ)Lₓfamily include SIFSIX-3-Ni, TIFSIX-3-Ni, NbOFFIVE-1-Ni and SIFSIX-2-Cu-i.

Suitable Cu-based MOFs include HKUST-1 and ROS-17.

Suitable Co-based MOFs include cobalt-based UTSA-16 and derivatives thereof.

Suitable Fe-based MOFs include MIL-100(Fe) and MIL-101(Fe).

Suitable mixed metal MOFs include MOFs based on mixtures of two or more metals selected from Fe, Ti and Zn.

Suitable MOFs can comprise mixed ligand or co-crystallite MOFs wherein the MOF comprises at least two chemically distinct organic ligands bonded to the same metal ion. This feature can help adjust the chemical behaviour of the MOF.

It may be preferred that the two chemically distinct organic ligands are chemical analogues. By chemical analogue, it is meant that the structural aspects of the ligand, specifically the backbone as well as the moieties that are involved in the bonding to metal ions, are the same.

An especially preferred feature is for the chemical distinct organic ligands to be chemical analogues, such that the organic ligands have the same backbone structure but differ from each other due to the functionalisation of the backbone structure. The structural similarity of how the different organic ligand anions bond to the metal ions means that variants of a specific MOF can be formed. If the organic ligands are too dissimilar then the MOF may be amorphous or full of defects.

For example, many MOFs have dicarboxylic acids as their organic ligands. Each carboxylic acid group is involved in bonding to a metal ion. The backbone structure refers to the structure between the two carboxylic acid binding groups.

The dimensions of the backbone structure determine the dimensions of the pores formed by the organic ligands connecting with the metal ions. The chemical differences come from functional pendant groups attached to the backbone structure.

Exemplary examples are shown below. In these cases, the backbone structure is (de-protonated) terephthalic acid (A).

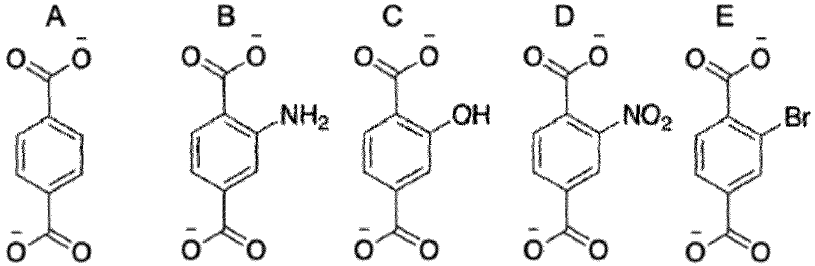

Additional exemplary examples are discussed below. Two exemplary chemical analogues are terephthalic acid (CAS 100-21-0) and 2-aminoterepthalic acid (CAS 10312-55-7). Other exemplary analogues of terephthalic acid include 2-bromoterephthalic acid (CAS 586-35-6), 2-nitroterephthalic acid (CAS 610-29-7), trimellitic acid (CAS 528-44-9), and 2-hydroxyterephthalic acid (CAS 636-94-2).

The use of such chemical analogues allows specific MOFs to be made having variable chemical properties. It may also be preferred that the two chemically distinct organic ligands comprise different backbone structures. The use of organic ligands having different backbone structures can allow for "defects" to be introduced in the monolith body, where the structure of the MOF is incomplete, or allow for more complex MOF structures. These defects can increase porosity in some situations.

Preferably, the molar ratio of a first organic ligand to a second organic ligand is greater than 1:2. More preferably, the molar ratio of the first organic ligand to the second organic ligand is greater than 1:3. Such ratios are effective at improving the physical properties and/or the chemical nature of the bodies made from such co-crystallites.

Adsorbent bodies comprising mixtures of framework materials can be prepared by mixing different framework materials together prior to the addition of the polymeric binder.

Suitable MOF adsorbent bodies can comprise mixtures of MOF crystallites made with different ligands. For example, suitable UiO-66 based MOFs can comprise mixtures of UiO-66 BDC and UiO-66 BDC-NH₂.
Suitable COFs for use with the present invention include imine and/or hydrazone linked COFs. Accordingly, the adsorbent body may comprise an imine and/or a hydrazone linked COF.

Examples of imine-linked COFs include 3D-COOH-COF, 3D-COOH-COF, 3D-CuPor-COF, 3D-CuPor-COF-0P, 3D-OH-COF, 3D-Por-COF, 3D-Por-COF-0P, 3D-Py-COF, 3D-Py-COF-2P, 4PE-1P, 4PE-1P-oxi, 4PE-2P, 4PE-3P, 4PE-TT, BF-COF-1, BF-COF-2, BW-COF-AA, BW-COF-AB, CCOF-1, CCOF-2, CC-TAPH-COF, COF-112, COF-300, COF-320, COF-366-Co, COF-366-F4-Co, COF-366-F-Co, COF-366, COF-366-(Ome)2-Co, COF-505, COF-AA-H, COFBTA-PDA, COF-DL229, COF-LZU1, COF-SDU1, COF-TpAzo, CuP-Ph COF, CuP-TFPh COF, DAAQ-TFP COF, DABQ-TFP-COF, DAQ-TFP COF, DaTP, DhaTab, 2,3-DhaTab, 2,5-DhaTab, 2,3-DhaTph, 2,5-DhaTph, 2,3-DhaTta, 2,3-DmaTph, DMTA-TPB1/2', DMTA-TPB1/3', DMTA-TPB1/4', DMTA-TPB1/5', DMTA-TPB2, DMTA-TPB3, DMTA-TPB4, EB-COF:Br, EB-COF:Cl, EB-COF:F, EB-COF:I, FL-COF-1, HAT-COF, HAT-NTBA-COF, HBC-COF, HB-COF-AA, HB-COF-AB, HCC-H2P-COF, HO2C-H2P-COF, SIOC-COF-5, SIOC-COF-6, SIOC-COF-7, TAPB-BMTTPA-COF, TAPB-PDA COF, TAPB-TFP, TAPB-TFPB, Tb-DANT-COF, TBI-COF, TDFP-1, TEMPO-COF, TFB-COF, TfBD, TfpBDH, TH-COF-1, Thio-COF, TPA-COF-1, TPA-COF-2, TpBD, TpBD-2NO2, TP-BDDA-COF, TpBDH, TPBD-ME2, TPB-DMTP-COF, TpBD-NH2, TpBD-NHCOCH3, TpBD-NO2, TpBD-(OMe)2, TpBPy, TP-COF-BZ, TP-COF-DAB, Tp-DANT-COF, TPE-COF-I, TPE-COF-II, TPE-COF-III, TPE-COF-IV, TP-EDDA-COF, TpMA, TpPa-1, TpPa-2, TpPa-F4, TpPa-NO2, TpPa-Py, TpPa-SO3H, TpPa-SO3H-Py, Tp-Stb, TPT-COF-1, TPT-COF-2, TpTD, TpTG-Br, TpTG-Cl, TpTG-I, TpPa-1-F2, Tp-Ttba, TRIPTA, TTF-COF, TTF-Py-COF, TTI-COF, TzDa, Tp-Azo, HPB-COF, ILCOF-1-AA, ILCOF-1-AB, iPrTAPB-TFP, iPrTAPB-TFPB, LZU-301, LZU-301-sol, LZU-70, LZU-72, LZU-76, N3-COF, NN-TAPH-COF, NS-COF, NUS-10, NUS-14, NUS-15, NUS-9, HO-H2P-COF, OH-TAPH-COF, PC-COF, PI-2-COF, PI-3-COF, Por-COF, Py-1P COF, Py-1PF COF, Py-2,2'-BPyPh-COF, Py-2,3-BPyPh-COF, Py-2,3-DHPh-COF, Py-2PE COF, Py-3PEBTD COF, Py-3PE COF, Py-An COF, Py-DHPh COF, PyTTA-BFBIm-iCOF, RT-COF-1, SA-COF, Salen-COF, SB-PORPy, SIOC-COF-3-AB, and SIOC-COF-4-AB.

Examples of hydrazone-linked COFs include COF-42-bnn, COF-42-gra, COF-43-bnn, COF-43-gra, COF-ASB, COF-LZU8, CPF-1, CPF-2, and TFPT-COF.

**First Solvent and Reaction Solvent.** The first solvent describes the solvent or solvent mix which is present in the wet framework mass. The first solvent may contain residual amounts of solvents from earlier in the process in addition to solvents added for washing or other purposes. Typically, the first solvent is not the same as the solvent used in the synthesis of the framework (the reaction solvent). Often the reaction solvent is difficult to handle and it is preferable if it can be washed out and replaced by the first solvent to simplify later processing. Preferred first solvents include dimethyl sulfoxide (DMSO), polar, aprotic solvents such as dimethylformamide (DMF), dimethylacetamide (DMS) and N-methyl-2-pyrolidone, lower molecular weights alcohols including ethanol and methanol, water, acetone, organic acids such as acetic acid and mixtures and combinations thereof. Water is especially preferred.

**Polymeric binder.** Preferably, the polymeric binder is an organic polymeric binder selected from polyvinyl alcohol (PVA), polyethyleneimine, polyvinyl pyrrolidone, polyimide (PI), polyvinyl formal, polyacrylic acid, sodium polyacrylate, polyethylene glycol, polypropylene glycol, poly(1,4-phenylene- ether-ether-sulfone) (PFEES), poly(dimethylsiloxane) (PDMS), poly(tetrahydrofuran) (PTHF), polyolefin, polyamide, chitosan, cellulose acetate, hydroxypropyl methylcellulose (HPMC), methylcellulose, hydroxypropyl methylcellulose phthalate (HPMCP), and any combination thereof.

The polymeric binder can also include inorganic polymeric binders, especially sodium silicate.

**Wet binder mass.** The wet binder mass is formed in step (b). It may be preferred for the wet binder mass to be formed from dried framework material that has been suitably dispersed in the first solvent. Typically, the wet binder mass will comprise less than 30 wt.% solids content or less than 25% solids content or less than 20% solids content.

**Undried binder mass.** The undried binder mass is formed in step (c). It may be preferred for the undried binder mass to comprise less than 75% free solvent, or less than 70% free solvent or less than 60% free solvent or even less than 50% free solvent.. For any given adsorbent framework, the undried binder mass contains less free solvent than the wet binder mass. Typically, it is important to control the rheology of the undried binder mass. The rheology of the undried binder mass is a complex combination of factors such as framework particle size, amount of first solvent present, nature of the organic polymeric binder, and presence of other materials. Typically, it is necessary for mixes being cut to be sufficiently "solid-like" if they are to be successfully cut without smearing.

In addition, a preferred option is for the formed bodies to be subjected to a rounding step after cutting or breaking - for example in a spheroniser. Rounding of the formed bodies is preferred as a dust reduction step. However, for the extrudates to be rounded, they need to be sufficiently deformable for this to happen. Typically, there is an optimum operating range for the rheology values of the mixes being cut. When water is used as a solvent, this means that there is an optimum water activity range.

One measure of how "solid-like" a material is its viscosity. Typically, it is therefore important for the viscosity of the undried binder mass to be within certain limits.

Thus, the undried binder mass in preferred methods of the present invention, typically has a viscosity at 10 s⁻¹ of greater than 3.0 × 10⁵ mPa.s or greater than 4.0 × 10⁵ mPa.s or greater than 5.0 × 10⁵ mPa.s or greater than 6.0 × 10⁵ mPa.s or greater than 7.0 × 10⁵ mPa.s or even greater than 1.0 mPa.s × 10⁶ mPa.s. The preferred viscosity may be chosen based on the nature and design of the cutting and subsequent processing steps. In preferred methods of the present invention, the undried binder mass typically has a viscosity at 10 s⁻¹ of less than 3.0 × 10⁶ mPa.s or less than 2.0 × 10⁶ mPa.s or less than 1.25 × 10⁶ mPa.s.

**Undried adsorbent body.** The undried adsorbent body is formed in step (d).

**Dried adsorbent body.** The dried adsorbent body is formed in step (e).

**Second solvent.** Preferred second solvents include water and lower molecular weight alcohols including ethanol and methanol. The second solvent can comprise a mix of solvents. More than one second solvent could be used in the washing step. Typically, the second solvent is not the same as the first solvent or the reaction solvent or the solvent used to form any polymeric binder solutions.

**Washed adsorbent body.** The washed adsorbent body is formed in step (f).

**Unactivated adsorbent body.** The unactivated adsorbent body is formed in step (g).

**Adsorbent body.** The adsorbent body comprises framework material and polymeric binder. Typically, the adsorbent body has a minimum internal dimension of less than 10 mm. This can be measured by optical means, such as microscopy. Typically, the adsorbent body has an envelope density of greater than 0.7 g/cm³.

**Hansen Solubility Parameters.** The HSP values of most solvents can be found in standard reference tables such as the CRC Handbook of Solubility Parameters and Other Cohesion Parameters (2nd Edition).

**Method of measuring viscosity.** Suitable equipment for measuring the viscosity of undried binder mass is an Anton Paar MCR 92 Rheometer with a 25 mm diameter plate, a 25 degree angle cone with a gap of 3.0 mm and measured at 25 °C. A sample of ~ 2g is placed on the plate, the upper cone lowered to the target gap distance, excess sample removed from the sides and the rotational viscosity measured. Typically the viscosity is measured over a range up to a shear rate of 50 s⁻¹. For the purpose of this document, the viscosity of a material is the viscosity measured at 10 s⁻¹.

**Method of measuring water activity.** The water activity of a material is defined as the fractional relative humidity of an atmosphere in equilibrium with that material, i.e., the ratio of the partial pressure of water vapour above the material to that present above pure water at the same temperature. The term "Relative Humidity" (or RH) is used to describe the water in the atmosphere or gas phase which is in equilibrium with the solid, and is expressed as a percentage, with 100% as the Relative Humidity of pure water in a closed system. Thus, for any material, the water activity value (aw) is defined as % RH/100.

Suitable equipment includes the HC2-AW probe connected to a Hygrolab C1 display unit, both from Rotronic Measurement Solutions. Equipment should be properly set-up and operated as per the manufacturers instructions. The RH of a material is measured by placing a sample of the material inside the measurement chamber of the HC2-AW such that > 1/4 of the available volume is filled with sample, sealing the chamber and allowing the measurement to reach equilibrium as indicated on the display.

Unless otherwise specified, water activity measurements are made at 25° C.

**Method for characterising the particle size distribution of particles in an adsorbent body by SAXS.** The particle size distribution of the adsorbent particles forming the adsorbent body can be characterised by SAXS. In principle, in a SAXS experiment, the light is scattered as a result of the contrast in electron density between two phases. Based on this, one can calculate the size of an equivalent spherical particle, or other shapes. The SAXS intensity at a particular angle depends on the electron density contrast. It also depends on the size of the particles. Large particles scatter at low angles and small particles scatter at larger angles. To generate a measurement, pieces of adsorbent material are mounted on a sample holder. For SAXS, the X-rays are produced by synchrotron radiation. One or more sets of data are collected to cover the whole range in scattering angle. A Kratky instrument can be used to collect small-angle scattering at the larger scattering angles (1e-1 to 4e-0 degrees). A Bonse Hart instrument can be used to collect small-angle scattering at the smaller scattering angles (2.2e-3 to 5e-1 degrees). In this case, the two datasets are combined into a single scan after background subtraction, and the data are subsequently de-smeared. These de-smeared data are then transformed to a volume size distribution function by the regularization technique. The volume distribution function is the final output of this procedure.

**Measurement of particle size of the framework crystallites.** The particle size distribution of the framework crystallites when in the reaction mix can be measured by Dynamic Light Scattering. Suitable equipment includes the NANO-flex II from Colloid Metrix operated according to manufacturers instructions. The sample probe can be inserted directly in the reaction mix. Dilution of the reaction mix is usually not required.

**Embodiments of the present invention.** The following are embodiments of the present invention.
1. A process for the production of an adsorbent body, wherein the process comprises the steps of:
   (a) forming a wet framework mass, wherein the wet framework mass comprises:
      (i) an organic framework; and
      (ii) between 50wt % and 95 wt% of first solvent;
   (b) contacting the wet framework mass with a polymeric binder to form a wet binder mass;
   (c) removing at least some but not all of the first solvent from the wet binder mass to form an undried binder mass;
   (d) extruding and/or cutting the undried binder mass to form an undried adsorbent body;
   (e) removing at least some of the first solvent from the undried adsorbent body to form a dried adsorbent body;
   (f) contacting the dried adsorbent body with a second solvent to form a washed adsorbent body;
   (g) removing at least some of the second solvent from the washed adsorbent body to form an unactivated adsorbent body; and
   (h) activating the unactivated adsorbent body by subjecting the unactivated adsorbent body to a temperature of greater than 100°C to form an adsorbent body.
2. A process according to embodiment 1, wherein step (a) is carried out by:
   (i) contacting together:
      (a) a metal-organic framework precursor material and/or a covalent organic framework precursor material; and,
      (b) reaction solvent,
      so as to form a dilute reaction mixture, wherein the dilute reaction mixture comprises:
      (a) metal-organic framework crystallites and/or covalent organic framework crystallites; and
      (b) reaction solvent;
   (ii) removing reaction solvent from the dilute reaction mixture;
   (iii) contacting the concentrated reaction mix with the first solvent; and
   (iv) removing some, but not all, of the first solvent to form a wet framework mass.
3. A process according to embodiment 2, wherein the metal-organic framework crystallites and/or covalent organic framework crystallites in the dilute reaction mixture are aggregated into larger secondary particles prior to removal of part of the first solvent.
4. A process according to embodiment 3, wherein the aggregation step is carried out by at least one of the following:
   (a) addition of an anti-solvent;
   (b) addition of a polymeric aggregation aid, including the polymer used a binder; and/or
   (c) application of high-frequency ultrasound.
5. A claim according to embodiment 4, wherein the anti-solvent is miscible with the reaction solvent and has a hydrogen bond HSP parameter dH that is different to the HSP hydrogen bond parameter of the reaction solvent by more than 10 MPa^{0.5}.
6. A process according to any of embodiments 2-5, wherein the solvent removal step (ii) is carried out by at least one of the following:
   (a) a filtration step;
   (b) a sedimentation step;
   (c) a centrifugation step;
   (d) an evaporation step; and
   (e) any combination thereof.
7. A process according to any preceding embodiment, wherein the wet framework mass is subjected to a roller milling treatment.
8. A process according to any preceding embodiment, wherein the organic polymeric binder is selected from polyvinyl alcohol (PVA), polyethyleneimine, polyimide (PI), polyvinyl pyrrolidone, polyvinyl formal, polyacrylic acid, sodium polyacrylate, polyethylene glycol, polypropylene glycol, poly(1,4-phenylene- ether-ether-sulfone) (PFEES), poly(dimethylsiloxane) (PDMS), poly(tetrahydrofuran) (PTHF), polyolefins, polyamide, chitosan, celluloses including cellulose acetate, hydroxypropyl methylcellulose (HPMC), methylcellulose, carboxymethyl cellulose, hydroxypropyl methylcellulose phthalate (HPMCP), and any combination thereof.
9. A process according to any preceding embodiment, wherein the metal-organic framework (MOF) is selected from:
   (i) Zr-containing MOFs;
   (ii) Zn-containing MOFs;
   (iii) MOF-74 and derivatives thereof;
   (iv) Al-based MOFs;
   (v) Fe-based MOFs;
   (vi) MOFs of the M(F₆₋ₓ)Lₓ family;
   (vii) Cu-based MOFs;
   (viii) Co-based MOFs;
   (ix) Cr-based MOFs;
   (x) Nb-based MOFs;
   (xi) Ni-based MOFs;
   (xii) Mn-based MOFs;
   (xiii) mixed metal MOFs; and
   (xiv) any combination thereof.
10. A process according to any preceding embodiment, where step (c) is carried out by at least one of the following:
   (i) evaporation of solvent; and/or
   (ii) addition of an adsorbent powder to the wet binder material, wherein the adsorbent powder is selected from silica, zeolite, activated carbon, graphene, metal-organic framework, covalent organic framework, or combinations thereof.
11. A process according to any preceding embodiment, wherein the undried binder mass formed in step (c) has a viscosity at 10 s⁻¹ and 25 °C of between 3.0 × 10⁵ mPa.s and 3.0 × 10⁶ mPa.s.
12. A process according to any preceding embodiment, wherein the first solvent is water and the undried binder mass has a water activity of between 0.5 and 0.9 or between 0.55 and 0.85 or even between 0.6 and 0.8.
13. A process according to any preceding embodiment, wherein the adsorbent body comprises:
   (i) more than 50wt% metal-organic framework material and/or covalent organic framework material; and
   (ii) less than 20wt% polymeric binder.
14. A process according to any preceding embodiment, where the metal-organic framework is selected from NbOFFIVE-1-Ni and the polymeric organic binder is selected from polyvinyl alcohol or methylcellulose.
15. A process according to any preceding embodiment, wherein the undried adsorbent body is subjected to a spheronisation treatment.

### Examples

1 litre of a reaction mix comprising MOF (UiO-66-NH₂) crystallites having a mean particle size of less than 900 nm dispersed in a reaction solvent comprising water and a solids content of 10% was prepared.

The sample was divided into four equal aliquots and each aliquot was centrifuged in a Jeol JR15 for 15 minutes at 5250 g.

The supernatant liquid was poured off from each sample flask leaving a wet layer of solid at the bottom of the flask. 250g of methanol was then added to each flask and the sample was agitated to redisperse and wash the crystallites.

The flasks were then re-centrifuged for 40 minutes at 5250 g to form a thick solid layer (the wet framework mass) comprising MOF, methanol and any residual reactants/solvents from the reaction mix. The solid layer was analysed to have a solids content of 27.5%.

280g of the wet framework was then mixed with 280g of a 2.6 wt% aqueous solution of methylcellulose to form a wet binder mass. This had a solids level of 14.9%, a viscosity of 2.54 × 10⁴ mPa.s at 10 s⁻¹ and 25 °C and a water activity of 0.95.

The level of the first solvent (in this case the mix of water and methanol) was reduced by stirring the wet binder mass in a Kenwood kitchen stand mixer with warm air impinging on the stirred mix from a hairdryer. This was done for 50 minutes to give an undried binder mass with a solid content of 27.9 %. The material was a very thick, but still sticky, paste.

0.5g of Sipernat 22S silica was mixed into 150g of the undried binder mass above. This gave an even more solid-like material. The solids content of the material was 29.8% and had a viscosity of 5.8 × 10⁵ mPa.s at 10 s⁻¹ and 25 °C and a water activity of 0.81.

The undried binder mass was then extruded through a hand spaghetti maker. The extrudates could be easily extruded without sticking to each other and could be easily cut. Samples of the extrudates were manually cut into 5 mm lengths and the cut extrudates were manually spheronised to form approximately spherical beads (undried adsorbent bodies).

The undried adsorbent bodies were then allowed to dry further at ambient conditions (21 °C) for 24 hours and formed hard, robust beads (dried adsorbent bodies) with a solids content of 77% and a water activity of 0.4.

1.2 g of the beads were then placed in 100 ml of methanol (second solvent) for 48 hours. The methanol was then replaced and the adsorbent bodies were left for a further 48 hours. The washed beads (washed adsorbent bodies) were removed from the methanol and allowed to dry under ambient conditions. The washed and dried beads (unactivated adsorbent bodies) were then activated by being heated to 105 °C in a vacuum oven for 12 hours to give the final adsorbent bodies. The activated beads had a BET area of 1050 m²/g.

## Claims

1. A process for the production of an adsorbent body, wherein the process comprises the steps of:
(a) forming a wet framework mass, wherein the wet framework mass comprises:
(i) an organic framework; and
(ii) between 50wt % and 95 wt% of first solvent;
(b) contacting the wet framework mass with a polymeric binder to form a wet binder mass;
(c) removing at least some but not all of the first solvent from the wet binder mass to form an undried binder mass;
(d) extruding and/or cutting the undried binder mass to form an undried adsorbent body;
(e) removing at least some of the remaining first solvent from the undried adsorbent body to form a dried adsorbent body;
(f) contacting the dried adsorbent body with a second solvent to form a washed adsorbent body;
(g) removing at least some of the second solvent from the washed adsorbent body to form an unactivated adsorbent body; and
(h) activating the unactivated adsorbent body by subjecting the unactivated adsorbent body to a temperature of greater than 100°C to form an adsorbent body.

2. A process according to claim 1, wherein step (a) is carried out by:
(i) contacting together:
(a) a metal-organic framework precursor material and/or a covalent organic framework precursor material; and
(b) reaction solvent,
so as to form a dilute reaction mixture, wherein the dilute reaction mixture comprises:
(a) metal-organic framework crystallites and/or covalent organic framework crystallites; and
(b) reaction solvent;
(ii) removing reaction solvent from the dilute reaction mixture;
(iii) contacting the concentrated reaction mix with first solvent; and
(iv) removing some, but not all, of the first solvent to form a wet framework mass.

3. A process according to claim 2, wherein the metal-organic framework crystallites and/or covalent organic framework crystallites in the dilute reaction mixture are aggregated into larger secondary particles prior to removal of reaction solvent.

4. A process according to claim 3, wherein the aggregation step is carried out by at least one of the following:
(a) addition of an anti-solvent;
(b) addition of a polymeric aggregation aid, including the polymer used as a binder; and/or
(c) application of high-frequency ultrasound.

5. A claim according to claim 4, wherein the anti-solvent is miscible with the reaction solvent and has a hydrogen bond HSP parameter dH that is different to the HSP hydrogen bond parameter of the first solvent by more than 10 MPa^{0.5}.

6. A process according to any of claims 2-5, wherein either or both of steps (ii) and (iv) are carried out by at least one of the following:
(a) a filtration step;
(b) a sedimentation step;
(c) a centrifugation step;
(d) an evaporation step; and
(e) any combination thereof.

7. A process according to claim 1, wherein the wet framework mass is formed by the dispersion of pre-dried framework material in first solvent.

8. A process according to any preceding claim, wherein the polymeric binder is an organic polymeric binder selected from polyvinyl alcohol (PVA), polyethyleneimine, polyimide (PI), polyvinyl pyrrolidone, polyvinyl formal, polyacrylic acid, sodium polyacrylate, polyethylene glycol, polypropylene glycol, poly(1,4-phenylene- ether-ether-sulfone) (PFEES), poly(dimethylsiloxane) (PDMS), poly(tetrahydrofuran) (PTHF), polyolefins, polyamide, chitosan, celluloses including cellulose acetate, hydroxypropyl methylcellulose (HPMC), methylcellulose, carboxymethyl cellulose, hydroxypropyl methylcellulose phthalate (HPMCP), and any combination thereof.

9. A process according to any preceding claim, wherein the metal-organic framework (MOF) is selected from:
(ii) Zr-containing MOFs;
(ii) Zn-containing MOFs;
(iii) MOF-74 and derivatives thereof;
(iv) Al-based MOFs;
(v) Fe-based MOFs;
(vi) MOFs of the M(F₆₋ₓ)Lₓ family;
(vii) Cu-based MOFs;
(viii) Co-based MOFs;
(ix) Cr-based MOFs;
(x) Nb-based MOFs;
(xi) Ni-based MOFs;
(xii) Mn-based MOFs;
(xiii) mixed metal MOFs; and
(xiv) any combination thereof.

10. A process according to any preceding claim, where step (c) is carried out by at least one of the following:
(i) evaporation of solvent; and/or
(ii) addition of an additional adsorbent solid material to the wet binder mass, wherein the additional adsorbent solid material is selected from silica, zeolite, activated carbon, graphene, metal-organic framework, covalent organic framework, or combinations thereof.

11. A process according to any preceding claim, wherein the undried binder mass formed in step (c) has a viscosity at 10s⁻¹ and 25 °C of between 3.0 × 10⁵ mPa.s and 3.0 × 10⁶ mPa.s.

12. A process according to any preceding claim, wherein the first solvent comprises water and the undried binder mass has a water activity of between 0.5 and 0.9.

13. A process according to any preceding claim, wherein the adsorbent body comprises:
(i) more than 50wt% metal-organic framework material and/or covalent organic framework material; and
(ii) less than 20wt% polymeric binder.

14. A process according to any preceding claim, where the framework material is a metal-organic framework is selected from NbOFFIVE-1-Ni and the polymeric organic binder is selected from polyvinyl alcohol or methylcellulose.

15. A process according to any preceding claim, wherein the undried adsorbent body is subjected to a spheronisation treatment.
